# EUROPÄISCHE PATENTSCHRIFT

(11) **EP 3 232 795 B1**
(45) Veröffentlichungstag und Bekanntmachung des Hinweises auf die Patenterteilung: **16.10.2019**
(21) Anmeldenummer: 15825599.2
(22) Anmeldetag: 09.12.2015
(51) Int. Cl.: A23C 7/04, A23C 9/142, A23C 19/05, A01J 11/00

(54) **VERFAHREN UND ANLAGE ZUR BEHANDLUNG VON MILCH ZUR HERSTELLUNG VON KÄSEREIMILCH MIT EINEM REDUZIERTEN GEHALT AN KEIMEN UND BAKTERIEN**
PROCESS AND PLANT FOR TREATING MILK FOR PRODUCING CHEESE DAIRY MILK COMPRISING A REDUCED CONTENT OF GERMS AND BACTERIA
PROCÉDÉ ET INSTALLATION POUR LA FABRICATION DE LAIT DE FROMAGERIE
PRÉSENTANT UNE TENEUR RÉDUITE EN BACTÉRIES ET GERMES

(30) Priorität: 18.12.2014 DE 102014019014
(43) Veröffentlichungstag der Anmeldung: 25.10.2017
(73) Patentinhaber: GEA TDS GmbH, 31157 Sarstedt (DE)
(72) Erfinder: LÖW, Joachim, 31141 Hildesheim (DE)
(74) Vertreter: Hauck Patentanwaltspartnerschaft mbB
(86) Internationale Anmeldenummer: PCT/EP2015/002485
(87) Internationale Veröffentlichungsnummer: WO 2016/096106

(56) Entgegenhaltungen:
- EP-B1- 0 194 286
- WO-A1-00/74495
- WO-A1-2007/108708
- DE-T2- 69 409 510
- FANNY GUYOMARC'H: "Formation of heat-induced protein aggregates in milk as a means to recover the whey protein fraction in cheese manufacture, and potential of heat-treating milk at alkaline pH values in order to keep its rennet coagulation properties. A review", DAIRY SCIENCE AND TECHNOLOGY (LE LAIT), Bd. 86, Nr. 1, 1. Februar 2006 (2006-02-01), Seiten 1-20, XP055268525, PARIS, FR ISSN: 0023-7302, DOI: 10.1051/lait:2005046

## Beschreibung

### TECHNISCHES GEBIET

Die Erfindung betrifft ein Verfahren und eine Anlage zur Behandlung von Milch zur Herstellung von Käsereimilch mit einem reduzierten Gehalt an Keimen und Bakterien, wobei im Wesentlichen zwei Varianten im Rahmen der vorliegenden Erfindung relevant sind. Nach einer ersten Verfahrensvariante gemäß Anspruch 1 wird die zugeführte Milch, vorzugsweise sog. Fettmilch, wenigstens einer ersten Mikrofiltration unterzogen, die zu einer Auftrennung in wenigstens ein Keime und Bakterien enthaltendes erstes Retentat und in wenigstens ein erstes Permeat mit einem reduzierten Gehalt an Keimen und Bakterien führt, wobei das wenigstens erste Retentat einer den Bakteriengehalt steuernden Behandlung, vorzugsweise einer thermischen Behandlung oberhalb von 100 °C, unterzogen wird, und wobei auf die den Bakteriengehalt steuernden Behandlung des wenigstens ersten Retentats eine Mischung des wenigstens ersten Retentats mit dem wenigstens ersten Permeat oder dem aus der letzten Mikrofiltration resultierenden letzten Permeat folgt.

Nach einer zweiten Verfahrensvariante gemäß Anspruch 2 wird die zugeführte Milch vor der wenigstens ersten Mikrofiltration zunächst einer Zentrifugierung unterzogen, die eine Auftrennung in eine Keime und Bakterien enthaltende Rahmfraktion und eine Keime und Bakterien enthaltende Magermilchfraktion bewirkt. Die Magermilchfraktion wird sodann in der vorstehend gemäß der ersten Verfahrensvariant beschriebenen Weise mikrofiltriert, und die Rahmfraktion oder Teile davon werden zusammen mit dem aus der Magermilchfraktion gewonnenen Retentat der den Bakteriengehalt steuernden Behandlung unterzogen. Die nachfolgende Behandlung zusammen mit dem aus der Magermilchfraktion resultierenden Permeat entspricht jener der ersten Verfahrensvariante.

### STAND DER TECHNIK

Es ist bekannt, die Milch zur Herstellung von Käse im Zuge ihrer Verarbeitung durch wenigstens eine einstufige Mikrofiltration in Phasen unterschiedlicher Zusammensetzung zu trennen. Neben einer Standardisierung der Inhaltstoffe im Rahmen unterschiedlicher Aufgabenstellungen soll vor allem die Abtrennung solcher Mikroorganismen in der Membran- bzw. Mikrofiltration erfolgen, die die Produktqualität im weiteren Prozess negativ beeinflussen. Die Mikroorganismen befinden sich in der Phase, die keine Filtermembran passiert haben, dem Retentat. Die andere Phase, die durch die Filtermembran hindurchtritt, das sog. Permeat, weist einen reduzierten Gehalt an Mikroorganismen, nachfolgend auch mit Keimen und Bakterien bezeichnet, auf.

Bei einer mehrstufigen Mikrofiltrierung in mehr als einer hintereinander geschalteten Mikrofiltration kommen vorzugsweise zwei alternative Varianten zur Anwendung. Nach einer ersten Variante wird ein jeweiliges Retentat, generiert aus einer zweiten und jeder weiteren Mikrofiltration, jeweils der vorhergehenden Mikrofiltration zugeführt. Eine zweite Variante zeichnet sich dadurch aus, dass die jeweiligen Retentate, generiert aus einer zweiten und jeder weiteren Mikrofiltration, entweder getrennt voneinander der ersten Mikrofiltration zugeführt werden oder zusammengeführt sind und die Mischung daraus der ersten Mikrofiltration zugeführt wird.

Es ist weiterhin bekannt, die im Retentat enthaltenen Keime und Bakterien anschließend durch eine den Keime- und Bakteriengehalt steuernde Behandlung, vorzugsweise eine thermische Behandlung durch Erhitzung, und hier vorzugsweise oberhalb von 100 °C, bis hin zu einer UHT-Erhitzung, zu inaktivieren. Dieser Behandlung, nachfolgend stets als den Bakteriengehalt steuernde Behandlung bezeichnet, kann allein das Retentat oder auch letzteres zusammen mit dem für die Käseherstellung vorgesehenem Fettanteil, beispielsweise in Form von Rahm, unterzogen werden.

Zum notorischen Fachwissen des Molkereifachmannes gehört, dass durch die Verwendung von Filtrationsprozessen, wie beispielsweise die Membran- bzw. Mikrofiltration, eine thermisch wenig belastete Käsereimilch von hoher bakteriologischer Qualität hergestellt werden kann. Eine Kombination dieser Filtrationsprozesse mit einer thermischen Behandlung der Milch auf relativ niedrigem Temperaturniveau (unterhalb von 100 °C), wie beispielsweise Thermisierung, Pasteurisierung oder auch Behandlung mit niedrigeren Temperaturen, kann dabei erfolgen. Anlagen zur Durchführung derartiger Verfahren können relativ lange Produktionszeiten erreichen, da die thermische Belastung gering gehalten werden kann, wodurch die Bildung von Ablagerungen an den Wandungen der Anlagen und die Ablagerungsgeschwindigkeit herabgesetzt werden.

Im Zusammenhang mit der thermischen Behandlung der Milch ist dem Fachmann weiterhin bekannt, dass eine Behandlung auf relativ hohem Temperaturniveau (oberhalb von 100 °C) andererseits den Vorteil hat, dass vor allem durch die Denaturierung von Molkenproteinen eine höhere Ausbeute (geringere Menge erforderliche Milch je Menge Käse) erzielt werden kann. Dies resultiert aus der Tatsache, dass sich durch die Denaturierung der Molkeproteine größere Partikel bilden, die in der Käsematrix und damit als Käse im Produkt verbleiben. Außerdem begünstig nach allgemeiner Kenntnis eine diesbezügliche thermische Behandlung die Fähigkeit der Milch, im späteren Käse Löcher entstehen zu lassen. Bei Käse, der nicht durch Labzugabe hergestellt wird, z.B. Frischkäse, wird in den meisten Fällen ein Großteil der Molkenproteine mittels Erhitzung der gesamten Milchmenge denaturiert.

Diesen Vorteilen stehen aber andere, negative Beeinflussungen der Milch im Zuge ihrer Behandlung auf hohem Temperaturniveau entgegen. So wird bei Labkäse durch die höhere Erhitzung der gesamten Milch deren Labfähigkeit herabgesetzt, sodass Qualitätsminderungen zu erwarten sind.

In der DE 600 02 199 T2, die aus der WO 00/74495 A1 hervorgegangen ist, ist ein Verfahren zur Behandlung von Milch beschrieben, mit dem eine standardisierte Milch mit einem reduzierten Gehalt an Keimen und Bakterien erhalten wird. Die zugeführte Milch wird dabei einer Zentrifugierung unterzogen, die eine Auftrennung in eine Keime und Bakterien enthaltende Rahmfraktion und eine Keime und Bakterien enthaltende Magermilchfraktion bewirkt. Die Magermilchfraktion wird einer ersten Mikrofiltration unterzogen, die zu einer Auftrennung in ein Keime und Bakterien enthaltendes erstes Retentat und in ein erstes Permeat mit einem reduzierten Gehalt an Keimen und Bakterien führt. Das erste Permeat wird einer zweiten Mikrofiltration unterzogen, die eine Auftrennung in ein zweites Retentat und ein zweites Permeat bewirkt, wobei das zweite Retentat zu der Zufuhrseite des ersten Mikrofiltrationsschrittes zurückgeführt wird. Das Retentat aus dem ersten Mikrofiltrationsschritt wird mit der aus der Zentrifugierung stammenden Rahmfraktion oder eines Teils davon zusammengeführt und diese beiden Komponenten werden einer gemeinsamen, den Bakteriengehalt steuernden Behandlung, beispielsweise einer thermischen Behandlung, unterzogen. Die derart behandelte Mischung wird mit dem zweiten Permeat zusammengeführt und vermischt, um so Milch mit dem gewünschten Fettgehalt zu erhalten.

In dem Dokument PEDERSEN, P. J., Microfiltration for the reduction of bacteria in milk and brine, New applications of membrane processes, Brussels, International Dairy Federation, 1992 (Special issue, 9201), S. 33-50 (Seiten 2, 3, 8, 9, 38, 39), ISBN 92-9098-006-0**,** wurde das vorstehend beschriebene Verfahren im Wesentlichen vorveröffentlicht, wobei der Unterschied zwischen dem jüngeren und dem älteren Verfahren darin besteht, das anstelle der zweistufigen Mikrofiltration eine einstufige Verwendung findet.

Aus der EP 2 777 389 A1 ist eine Verfahren und eine Anlage zur Herstellung von Milch als Käseausgangsmaterial bekannt, die, ausgehend von den vorstehend skizzierten und als konventionell bezeichneten Verfahren und Anlagen, eine erste Zentrifugierung der Ausgangsmilch (Rohmilch) in eine Rahmfraktion und eine Magermilchfraktion, eine einstufige Mikrofiltration der Magermilchfraktion in ein Permeat und ein Retentat, eine thermische Behandlung der Rahmfraktion oder Teile davon und eine Zusammenführung des in der Mikrofiltration generierten Permeats mit der Rahmfraktion vorsehen. Anstelle der in den vorstehenden Dokumenten beschriebenen thermischen Behandlung des Retentats wird letzteres in einer zweiten Zentrifugierung in eine saubere Fraktion mit einem niedrigen Bakteriengehalt und in eine Fraktion mit einem hohen Bakteriengehalt aufgetrennt. Die saubere Fraktion wird der Zufuhrseite der einstufigen Mikrofiltration zugeführt.

Die EP 0 194 286 B1 offenbart ein Verfahren und eine Vorrichtung zum Behandeln von Vollmilch zur Herstellung eines Milchproduktes mit einem niedrigen Bakteriengehalt. Dafür werden ein Separator, eine Mikrofiltrationsanlage sowie ein Wärmetauscher und eine Sterilisationseinheit verwendet. Im Wärmetauscher wird eine im Separator gewonnene Magermilchfraktion auf eine für die Mikrofiltration geeignete Temperatur erwärmt. In der Sterilisationseinheit werden das in der Mikrofiltration gewonnene Retentat und eine im Separator gewonnene Rahmfraktion einer den Bakteriengehalt steuernden Behandlung unterzogen. Die Wärmebehandlung in der Sterilisationseinheit richtet sich nach dem Verwendungszweck des Milchproduktes; für die Käseherstellung ist eine mildere Wärmebehandlung vorgesehen.

Es ist Aufgabe der vorliegenden Erfindung, ein Verfahren und eine Anlage zur Behandlung von Milch zur Herstellung von Käsereimilch mit einem reduzierten Gehalt an Keimen und Bakterien der einleitend beschriebenen Art zu schaffen, mit denen die Vorteile, wie sie durch die Behandlung der Milch einerseits auf niedrigem und andererseits auf hohem Temperaturniveau erzielt werden, mit variabler Schwerpunktsetzung miteinander kombiniert werden können. Dabei sollen die angestrebten Vorteile vorrangig bei der Herstellung von Labkäse erzielt werden.

### ZUSAMMENFASSUNG DER ERFINDUNG

Diese Aufgabe wird durch Verfahren mit den Merkmalen der unabhängigen Anspruche 1 oder 2 gelöst. Vorteilhafte Ausgestaltungen der Verfahren sind Gegenstand der Unteransprüche. Anlagen zur Durchführung der erfindungsgemäßen Verfahren sind Gegenstand des unabhängigen Anspruchs 12 und des abhängigen Anspruchs 13. Vorteilhafte Ausgestaltungen der Anlagen sind Gegenstand der zugeordneten Unteransprüche.

Der erfinderische verfahrenstechnische Grundgedanke besteht darin, dass ein Teil der Milch (Vollmilch bzw. Fettmilch oder Magermilch) einer thermischen Behandlung auf hohem Temperaturniveau (oberhalb von 100°C, bevorzugt zwischen 125 und 140 °C) unterzogen wird, der nicht filtriert wurde. Dieser Anteil, der allein thermisch behandelt wird, kann im Verhältnis zum Anteil der filtrierten Milch variabel sein, und er kann auch mit bereits filtriertem Medium (Retentat) vermischt werden. Bedeutsam ist, dass am Ende des Behandlungsprozesses ein Anteil thermisch behandelter, aber nicht filtrierter Milch in der gesamten, den Behandlungsprozess verlassenden Milch vorhanden ist. Anstelle einer Filtration kann auch eine Entkeimung durch Zentrifugierung durchgeführt werden.

Durch eine planmäßige Kombination der beiden an sich bekannten thermischen Behandlungsverfahren in einer Prozesslinie, nämlich Filtration auf niedrigem Temperaturniveau einerseits und einer den Bakteriengehalt steuernden Behandlung auf hohem Temperaturniveau andererseits, wobei es sich bei letzterer um eine thermische Behandlung durch Erhitzung oberhalb von 100 °C handelt, können die Vorteile beider Verfahren miteinander kombiniert werden. Hierbei kann die Wirkung durch unterschiedliche Aufteilung der Milchströme je nach herzustellendem (Zwischen-)Produkt gesteuert werden.

Neu ist aber auch, dass die beiden Behandlungsschritte, nämlich einerseits Erhitzen des aus der Filtration stammenden Retentats und andererseits planmäßige Denaturierung von Molkeproteinen, miteinander kombiniert werden. Die Kombination ermöglicht es, die notwendige Erhitzung an einem Ort und in einem Prozessschritt durchzuführen. Die Erhitzung wird dabei vorzugsweise rezepturabhängig durchgeführt. Für jede herzustellende Käsereimilch kann entsprechend zu der "Grundlast", bestehend aus dem durch Filtration hergestellten Permeat einerseits und andererseits dem durch Filtration hergestellten Retentat ggf. in Verbindung mit der aus der Zentrifugierung gewonnenen Rahmfraktion und ggf. auch einer Magermilchfraktion, ein Anteil der zugeführten Milch, erfindungsgemäß der zweite Teil Milch, mit hocherhitzt werden. Durch die Hocherhitzung des zweiten Teils Milch werden zwar mehr Molkeproteine denaturiert, jedoch verbleiben immer noch genügend "native" Molkeproteine, um die Labfähigkeit zu erhalten.

In diesem Zusammenhang sei erwähnt, dass es einerseits Käse gibt, wie beispielsweise klassischer Gouda, die einen insgesamt höheren Anteil an denaturierten Molkeproteinen vertragen, während andere, wie beispielsweise Großlochkäse, einen vergleichsweise niedrigeren Anteil aufweisen dürfen. Bei manchen Käsesorten wird die gewünschte Lochbildung durch Zugabe von nicht separierter Milch zur Hocherhitzung positiv beeinflusst, da dadurch der Anteil an feinsten Partikeln in der Milch erhöht wird, die wiederum die Lochbildung positiv beeinflussen.

Die konkrete erfinderische Lösung besteht gemäß einer ersten Verfahrensvariante darin, dass die zugeführte Milch in einen ersten Teil Milch und einen zweiten Teil Milch aufgeteilt wird, wobei das Aufteilungsverhältnis zwischen dem ersten Teil Milch und dem zweiten Teil Milch variabel und durch den Verwendungszweck der Käsereimilch vorgegeben ist.

Der erste Teil Milch wird zum Einen wenigstens der ersten Mikrofiltration unterzogen und der zweite Teil Milch wird zum Anderen mit dem wenigsten ersten Retentat aus der wenigstens ersten Mikrofiltration der gemeinsamen, den Bakteriengehalt steuernden Behandlung unterzogen. Die derart behandelte Mischung aus ersten Komponenten, bestehend aus einem nicht filtrierten behandelten zweiten Teil Milch und einem behandelten wenigstens ersten Retentat, wird mit dem wenigstens ersten Permeat oder dem aus der letzten Mikrofiltration resultierenden letzten Permeat zusammengeführt, um so standardisierte Käsereimilch zu erhalten.

Die konkrete erfinderische Lösung besteht gemäß einer zweiten Verfahrensvariante gemäß Anspruch 2 darin, dass die zugeführte Milch zunächst in einen ersten Teil Milch und einen zweiten Teil Milch aufgeteilt wird, wobei das Aufteilungsverhältnis zwischen dem ersten Teil Milch und dem zweiten Teil Milch variabel und durch den Verwendungszweck der Käsereimilch vorgegeben ist.

Der erste Teil Milch wird sodann zum Einen einer Zentrifugierung unterzogen und in eine Keime und Bakterien enthaltende Rahmfraktion und eine Keime und Bakterien enthaltende Magermilchfraktion aufgetrennt. Die gewonnene Rahmfraktion ist in einen ersten und in einen zweiten Teil Rahmfraktion aufteilbar. Nach einer vorteilhaften Ausgestaltung des Verfahrens ist das Aufteilungsverhältnis zwischen dem ersten Teil Rahmfraktion und dem zweiten Teil Rahmfraktion variabel und durch den Verwendungszweck der Käsereimilch vorgegeben.

Der zweite Teil Milch wird zum Anderen gemäß einer ersten Alternative zusammen mit dem wenigsten ersten Retentat aus der wenigstens ersten Mikrofiltration, generiert aus der Magermilchfraktion, der den Bakteriengehalt steuernden Behandlung unterzogen. Der zweite Teil Milch kann aber auch zum Anderen gemäß einer zweiten Alternative zusammen mit dem wenigsten ersten Retentat aus der wenigstens ersten Mikrofiltration und zusätzlich mit der Rahmfraktion oder einem ersten Teil Rahmfraktion der den Bakteriengehalt steuernden Behandlung unterzogen werden.

Die derart behandelte Mischung aus entweder zweiten Komponenten, bestehend aus einem nicht zentrifugierten behandelten zweiten Teil Milch und einem behandelten wenigstens ersten Retentat oder dritten Komponenten, bestehend aus einem nicht zentrifugierten behandelten zweiten Teil Milch und einem behandelten wenigstens ersten Retentat und einer behandelten Rahmfraktion oder einem behandelten ersten Teil Rahmfraktion, wird mit dem wenigstens ersten Permeat oder dem aus der letzten Mikrofiltration resultierenden letzten Permeat, jeweils generiert aus der Magermilchfraktion, zusammengeführt und vermischt, um so standardisierte Käsereimilch zu erhalten.

Eine vorteilhafte Ausgestaltung der zweiten Verfahrensvariante sieht vor, dass die aus der Zentrifugierung gewonnene, nicht filtrierte Magermilchfraktion in einen ersten Teil Magermilchfraktion und einen zweiten Teil Magermilchfraktion aufgeteilt wird. Der erste Teil Magermilchfraktion wird zum Einen wenigstens der ersten Mikrofiltration und der zweite Teil Magermilchfraktion wird zum Anderen der den Bakteriengehalt steuernden Behandlung unterzogen. Der derart behandelte zweite Teil Magermilchfraktion wird entweder mit der Mischung aus den zweiten Komponenten oder mit der Mischung aus den dritten Komponenten in der vorstehend beschriebenen Weise weiterbehandelt.

Nach einer weiteren vorteilhaften Ausgestaltung des Verfahrens ist das Aufteilungsverhältnis zwischen dem ersten Teil Magermilchfraktion und dem zweiten Teil Magermilchfraktion variabel und durch den Verwendungszweck der Käsereimilch vorgegeben.

Weiterhin wird vorgeschlagen, dass bei der Zentrifugierung anfallende Ablagerungen der den Bakteriengehalt steuernden Behandlung unterzogen werden. Derart behandelt können sie zusammen entweder mit der Mischung aus den zweiten Komponenten oder mit der Mischung aus den dritten Komponenten in der vorstehend beschriebenen Weise weiterbehandelt werden.

Eine andere Ausgestaltung sieht vor, dass bei der Zentrifugierung anfallende Ablagerungen zusammen mit dem zweiten Teil Magermilchfraktion der den Bakteriengehalt steuernden Behandlung unterzogen werden. Derart behandelt können diese beiden Bestandteile entweder mit der Mischung aus den zweiten Komponenten oder mit der Mischung aus den dritten Komponenten in der vorstehend beschriebenen Weise weiterbehandelt werden.

Das erfindungsgemäße Verfahren sieht vor, dass der Anteil der zweiten Komponente oder der dritten Komponente, bezogen auf die Menge zugeführte Milch, bis zu 20 Prozent beträgt, und dass die Ergänzung auf den Anteil von bis zu 20 Prozent durch den behandelten zweiten Teil Milch erfolgt. Der zweite Teil Milch wird demzufolge so eingestellt, dass er die Differenz zwischen dem durch die Filtration gegebenen Anteil bzw. dem durch die Filtration und durch die Zentrifugierung gegebenen Anteil und dem gewünschten Anteil von bis zu 20 % ergänzt. Dieser Sachverhalt wird nachfolgend an einem numerischen Beispiel verdeutlicht.

### Beispiel:

Es sollen beispielsweise 15 % (entsprechend 7.500 Liter/Stunde) des gesamten zugeführten Milchstromes (zugeführte Milch) bei einer Zulaufleistung von 50.000 Liter/Stunde für eine Käserezeptur hocherhitzt werden. Bei einem Rahm-Anteil, der in der Milch verbleibt und beispielsweise 8 % der Zulaufleistung beträgt (entsprechend 4.000 Liter/Stunde), und einem aus der Filtration resultierenden Retentat-Anteil, der beispielsweise 2 % (entsprechend 1.000 Liter/Stunde) der Zulaufleistung ausmacht, können erfindungsgemäß 2.500 Liter/Stunde der Hocherhitzung zugeführt werden.

Die Temperaturen im Bereich der Hocherhitzung, d.h bei der den Bakteriengehalt steuernde Behandlung, liegen zwischen 125 und 140 Grad Celsius, damit die durch die Filtration, vorzugsweise durch die Mikrofiltration, abgetrennten, unerwünschten und hitzebeständigen Keime, vor allem Clostridien und Bazillen, inaktiviert werden.

Der Gehalt an Keimen und Bakterien im Permeat kann dadurch weiter reduziert werden, dass sich die Mikrofiltrierung der Magermilchfraktion in mehr als einer hintereinander geschalteten Mikrofiltration vollzieht. Eine diesbezügliche erste Ausgestaltung des Verfahrens sieht vor, dass ein jeweiliges Retentat, generiert aus einer zweiten und jeder weiteren Mikrofiltration, jeweils der vorhergehenden Mikrofiltration zugeführt wird. Eine diesbezügliche zweite Ausgestaltung des Verfahrens sieht vor, dass die jeweiligen Retentate, generiert aus einer zweiten und jeder weiteren Mikrofiltration, entweder getrennt voneinander der ersten Mikrofiltration zugeführt werden oder zusammengeführt sind und die Mischung daraus der ersten Mikrofiltration zugeführt wird.

Eine erste Anlage zur Behandlung von Milch zur Herstellung von standardisierter Käsereimilch mit einem reduzierten Gehalt an Keimen und Bakterien zur Durchführung der ersten Verfahrensvariante weist, in an sich bekannter Weise, die folgenden Merkmale auf:
- eine Zufuhrleitung für Milch, die sich in einer ersten Leitung für einen ersten Teil Milch fortsetzt und verbunden ist mit
- wenigstens einer ersten Mikrofiltrationseinheit zum Auftrennen des ersten Teils Milch in ein Keime und Bakterien enthaltendes erstes Retentat und ein erstes Permeat mit einem reduzierten Gehalt an Keimen und Bakterien,
- wobei die Mikrofiltrationseinheit verbunden ist mit einer neunten Leitung für das erste Retentat und einer zehnten Leitung für das erste Permeat,
- wobei die neunte Leitung verbunden ist mit einer den Bakteriengehalt steuernden Einheit, welche wiederum verbunden ist mit einer elften Leitung für das in der den Bakteriengehalt steuernden Einheit behandelte erste Retentat,
- und wobei die zehnte Leitung und die elfte Leitung zusammengeführt sind und sich danach fortsetzen in einer Sammelleitung für das behandelte erste Retentat und für das wenigstens erste Permeat oder für das aus der letzten Mikrofiltration resultierende letzte Permeat.

Im Unterschied zum vorstehend definierten Stand der Technik ist die erfindungsgemäße erste Anlage gemäß Anspruch 12 dadurch gekennzeichnet, dass am Übergang von der Zufuhrleitung zur ersten Leitung eine zweite Leitung für einen zweiten Teil Milch abzweigt und die zweite Leitung verbunden ist mit der den Bakteriengehalt steuernden Einheit, wobei die Verzweigung derart ist, dass die Aufteilung in den ersten Teil Milch (M1) und den zweiten Teil Milch (M2) variierbar ist.

Eine zweite Anlage gemäß Anspruch 13 zur Behandlung von Milch zur Herstellung von standardisierter Käsereimilch mit einem reduzierten Gehalt an Keimen und Bakterien zur Durchführung der zweiten Verfahrensvariante weist die an sich bekannten Merkmale der ersten Anlage auf und ist erfindungsgemäß dadurch gekennzeichnet,
- dass die erste Leitung für den ersten Teil Milch verbunden ist mit einer Zentrifugalabscheidereinheit zum Auftrennen des ersten Teils Milch in eine Keime und Bakterien enthaltende Rahmfraktion und eine Keime und Bakterien enthaltende Magermilchfraktion,
- dass die Zentrifugalabscheidereinheit jeweils verbunden ist mit einer dritten Leitung für die Magermilchfraktion, mit einer sechsten Leitung für die Rahmfraktion und mit einer zwölften Leitung für Ablagerungen in der Zentrifugalabscheidereinheit,
- dass sich die dritte Leitung verzweigt in eine vierte Leitung für einen ersten Teil Magermilchfraktion und in eine fünfte Leitung für einen zweiten Teil Magermilchfraktion,
- dass sich die sechste Leitung verzweigt in eine über ein Regelventil geführte siebte Leitung für einen ersten Teil Rahmfraktion und in eine achte Leitung für einen zweiten Teil Rahmfraktion,
- dass die vierte Leitung verbunden ist mit wenigstens der ersten Mikrofiltrationseinheit und
- dass aus der fünften, der siebten und der zwölften Leitung beliebig ausgewählte Leitungen mit der den Bakteriengehalt steuernden Einheit verbunden sein können.

Sowohl in der ersten als auch in der zweiten Anlage werden die beiden Behandlungsschritte, nämlich einerseits Erhitzen des aus der Filtration stammenden Retentats und andererseits planmäßige Denaturierung von Molkeproteinen, miteinander kombiniert. Durch die Kombination ist nur eine Erhitzungsanlage, die den Bakteriengehalt steuernde Einheit, erforderlich, die in ihrer Leistung, vorzugsweise rezepturabhängig, geregelt wird.

Eine weitere Ausgestaltung, die gleichermaßen auf die erste und die zweite Anlage anwendbar ist, sieht vor, dass mehr als eine in Reihe geschaltete Mikrofiltrationseinheit vorgesehen sind, und dass eine jeweilige Retentatleitung einer zweiten und jeder weiteren Mikrofiltrationseinheit jeweils in Form einer Rückführleitung mit einer Zufuhrleitung der vorhergehenden Mikrofiltrationseinheit verbunden ist.

Eine weitere diesbezügliche Ausgestaltung, die ebenfalls gleichermaßen auf die erste und die zweite Anlage anwendbar ist, sieht vor, dass mehr als eine in Reihe geschaltete Mikrofiltrationseinheit vorgesehen sind, und dass die jeweiligen Retentatleitungen einer zweiten und jeder weiteren Mikrofiltrationseinheit entweder getrennt voneinander mit einer Zufuhrleitung der ersten Mikrofiltrationseinheit verbunden sind oder in einer Retentat-Sammelleitung zusammengeführt sind und diese mit einer Zufuhrleitung der ersten Mikrofiltrationseinheit verbunden ist.

### KURZBESCHREIBUNG DER ZEICHNUNGEN

**Figur 1** zeigt den Stand der Technik (WO 00/74495 A1), von dem die vorliegende Erfindung im Rahmen einer zweiten Verfahrensvariante ausgeht.
   Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen zweier bevorzugter Verfahren und Anlagen zu deren Durchführung realisiert ist, sind in der Zeichnung eine erste und eine zweite erfindungsgemäße Anlage dargestellt, wobei mit jeder Anlage ein bevorzugtes Verfahren mit jeweils unterschiedlichen Ausgestaltungen durchführbar ist. Die beiden Anlagen sind nachfolgend nach Aufbau und Funktion beschrieben. Es zeigen
**Figur 2** in schematischer Darstellung eine erfindungsgemäße erste Anlage ohne Zentrifugierung der zugeführten Milch und
**Figur 3** ebenfalls in schematischer Darstellung eine erfindungsgemäße zweite Anlage mit Zentrifugierung der zugeführten Milch, wobei beide Anlagen, vom Prozessende her gesehen, bis zum Eintritt einerseits in die Mikrofiltration und andererseits in die den Bakteriengehalt steuernden Behandlung gleich ausgeführt sind.

### DETAILLIERTE BESCHREIBUNG

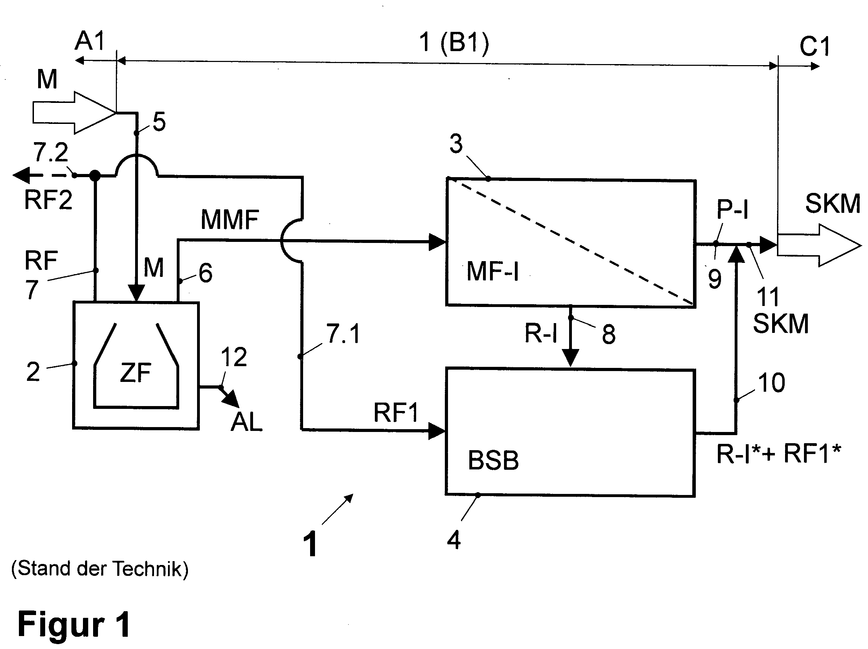

Eine Anlage 1 (**Figur 1**) zur Behandlung von Milch M zur Herstellung von standardisierter Käsereimilch SKM mit einem reduzierten Gehalt an Keimen und Bakterien, wie sie aus dem Stand der Technik bekannt ist, bildet einen Anlagenabschnitt B1 zwischen einer vorgeordneten Prozessanlage A1 und einer nachgeordneten Prozessanlage C1. Die vorgeordnete und die nachgeordnete Prozessanlage A1, C1 sind nicht näher dargestellt, wobei beispielsweise in der vorgeordneten Prozessanlage A1 eine thermische Vorbehandlung und Lagerung der Milch M und in der nachgeordneten Prozessanlage C1 weitere Behandlungsschritte zur Herstellung des Käseendprodukts erfolgen können.

Die zu behandelnde Milch M wird über eine Zufuhrleitung 5, die mit einer Zentrifugalabscheidereinheit 2 verbunden ist, letzterer zugeführt. In der Zentrifugalabscheidereinheit 2 erfolgt eine Zentrifugierung ZF der Milch M und damit deren Auftrennung in eine Keime und Bakterien enthaltende Rahmfraktion RF und eine Keime und Bakterien enthaltende Magermilchfraktion MMF. Die Zentrifugalabscheidereinheit 2 ist jeweils verbunden mit einer dritten Leitung 6 für die Abfuhr der Magermilchfraktion MMF, einer sechsten Leitung 7 für die Abfuhr der Rahmfraktion RF und einer zwölften Leitung 12 für die Abfuhr von Ablagerungen AL, die sich in der Zentrifugalabscheidereinheit 2 sammeln.

Die dritte Leitung 6 ist verbunden mit wenigstens einer ersten Mikrofiltrationseinheit 3, in der durch eine erste Mikrofiltration MF-I eine Auftrennung der Magermilchfraktion MMF in ein Keime und Bakterien enthaltendes erstes Retentat R-I und ein erstes Permeat P-I mit einem reduzierten Gehalt an Keimen und Bakterien erfolgt. Die Mikrofiltrationseinheit 3 ist weiterhin verbunden mit einer neunten Leitung 8 zur Ableitung des ersten Retentats R-I und einer zehnten Leitung 9 für die Ableitung des ersten Permeats P-I.

Es ist auch bereits bekannt, dass mehr als eine in Reihe geschaltete Mikrofiltrationseinheit 3 vorgesehen sind, wobei in der zweiten Mikrofiltrationseinheit durch eine zweite Mikrofiltration MF-II ein zweites Retentat R-II und ein zweites Permeat P-II und durch jede weitere Mikrofiltration MF-III, MF-IV, usw. die zugeordneten Retentate R-III, R-IV, usw. und die zugeordneten Permeate P-III, P-IV, usw. generiert werden. Nach einer diesbezüglichen ersten Ausgestaltung ist eine jeweilige Retentatleitung 8 einer zweiten und jeder weiteren Mikrofiltrationseinheit jeweils in Form einer Rückführleitung mit einer Zufuhrleitung der vorhergehenden Mikrofiltrationseinheit verbunden. Nach einer diesbezüglichen zweiten Ausgestaltung sind die jeweiligen Retentatleitungen 8 einer zweiten und jeder weiteren Mikrofiltrationseinheit entweder getrennt voneinander mit einer Zufuhrleitung der ersten Mikrofiltrationseinheit 3 verbunden oder sie sind in einer Retentat-Sammelleitung zusammengeführt und diese ist mit einer Zufuhrleitung der ersten Mikrofiltrationseinheit 3 verbunden. Im Ausführungsbeispiel wäre diese Zufuhrleitung die dritte Leitung 6 für die Magermilchfraktion.

Die sechste Leitung 7 verzweigt sich in eine siebte Leitung 7.1 für die Weiterleitung eines ersten Teils Rahmfraktion RF1 und eine achte Leitung 7.2 für die Weiterleitung eines zweiten Teils Rahmfraktion RF2. Die siebte Leitung 7.1 ist mit einer den Bakteriengehalt steuernden Einheit 4, in der eine den Bakteriengehalt steuernde Behandlung BSB, vorzugsweise eine thermische Behandlung durch Erhitzung oberhalb von 100 °C, durchgeführt wird, verbunden. Die den Bakteriengehalt steuernde Einheit 4 ist weiterhin verbunden mit der neunten Leitung 8 für die Zufuhr des ersten Retentats R-I und mit einer elften Leitung 10 für die Abfuhr eines behandelten ersten Retentats R-I* und eines behandelten ersten Teils Rahmfraktion RF1*. Die zehnte Leitung 9 für das erste Permeat P-I und die elfte Leitung 10 sind zusammengeführt und setzen sich in einer Sammelleitung 11 fort, die die standardisierte Käsereimilch SKM, bestehend aus dem behandelten ersten Retentat R-I*, dem behandelten ersten Teil Rahmfraktion RF-I* sowie dem wenigstens ersten Permeat P-I oder dem aus der letzten Mikrofiltration resultierenden letzten Permeat, abführt.

Die bekannte Anlage 1 verfügt notwendigerweise an bestimmten Stellen über Absperr- und Steuer- bzw. Regeleinrichtungen, die dem Fachmann geläufig sind und die in **Figur 1** nicht dargestellt sind.

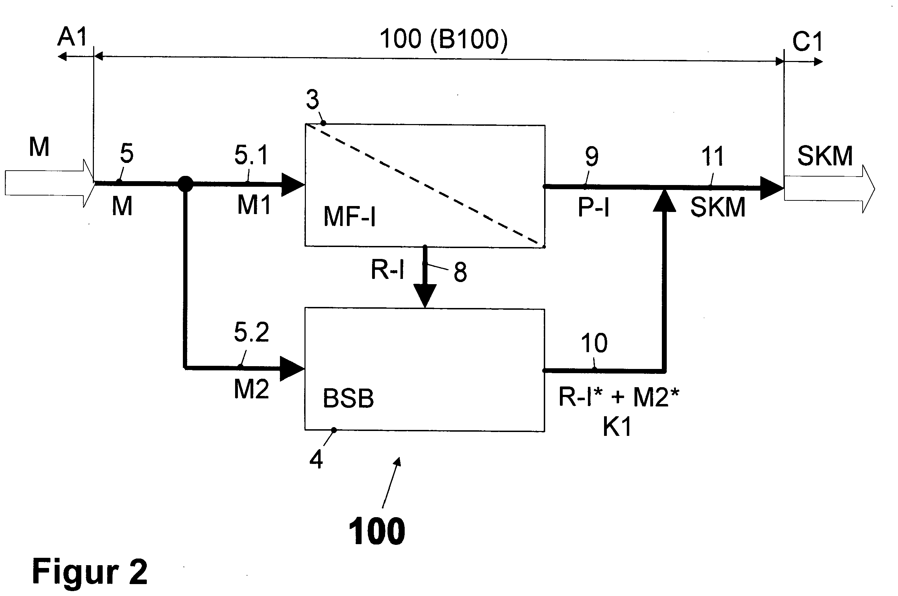

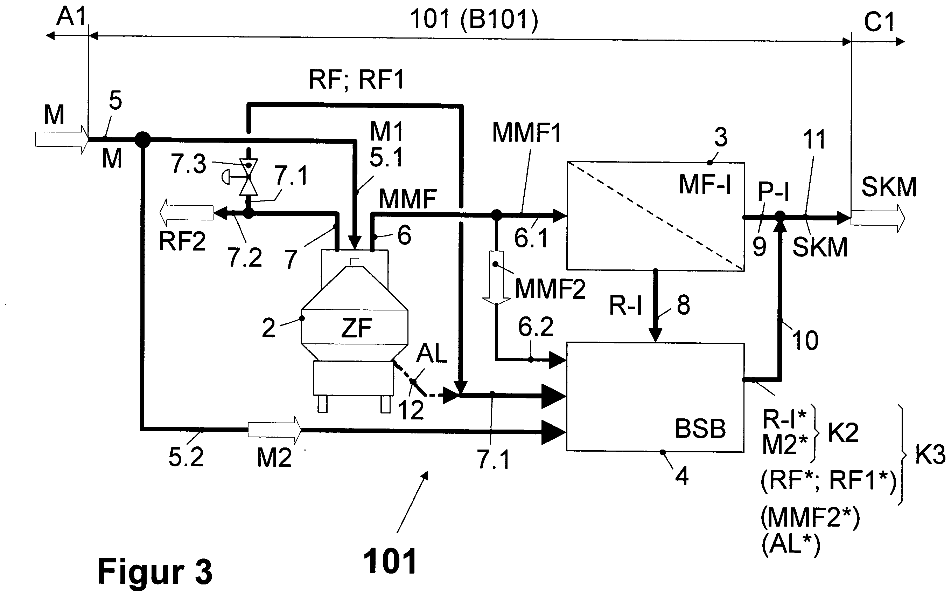

Eine erste Anlage 100 nach der Erfindung (**Figur 2**), die einen ersten Anlagenabschnitt B100 umfasst, und eine zweite Anlage 101 (**Figur 3**), die einen zweiten Anlagenabschnitt B101 umfasst, wobei die Anlagenabschnitte 100, 101 jeweils zwischen der vorgeordneten Prozessanlage A1 und der nachgeordneten Prozessanlage C1 ausgebildet sind, werden nachfolgend nur insoweit nach Aufbau und Funktion vollständig beschrieben, wie sie sich von der im Stand der Technik bekannten Anlage 1 gemäß **Figur 1** unterscheiden. Übereinstimmende Merkmale der Anlagen 1, 100 und 101 tragen die gleiche Bezeichnung.

Die Zufuhrleitung 5 (**Figur 2**), über die die zu behandelnde Milch M zuströmt, verzweigt sich in eine erste Leitung 5.1 für einen ersten Teil Milch M1 und eine zweite Leitung 5.2 für einen zweiten Teil Milch M2. Dabei ist das Aufteilungsverhältnis zwischen dem ersten Teil Milch M1 und dem zweiten Teil Milch M2 variabel, vorzugsweise steuerbar und durch den Verwendungszweck der Käsereimilch vorgegeben.

Die erste Leitung 5.1 ist verbunden mit der ersten Mikrofiltrationseinheit 3 zum Auftrennen des ersten Teils Milch M1 in das Keime und Bakterien enthaltende erste Retentat R-I und das einen reduzierten Gehalt an Keimen und Bakterien aufweisende erste Permeat P-I und führt dieser den ersten Teil Milch M1 zu. Die zweite Leitung 5.2 ist verbunden mit der den Bakteriengehalt steuernden Einheit 4, in der neben dem über die neunte Leitung 8 zugeführten ersten Retentat R-I der zweite Teil Milch M2 der den Bakteriengehalt steuernden Behandlung BSB, vorzugsweise einer thermischen Behandlung durch Erhitzung oberhalb von 100 °C, unterzogen wird. Die elfte Leitung 10 führt aus der den Bakteriengehalt steuernden Einheit 4 die Mischung aus ersten Komponenten K1, bestehend aus einem nicht filtrierten behandelten zweiten Teil Milch M2* und dem behandelten wenigstens ersten Retentat R-I*, ab und führt die ersten Komponenten K1 mit dem in der zehnten Leitung 9 herangeführten wenigstens ersten Permeat P-I oder dem aus der letzten Mikrofiltration resultierenden letzten Permeat zusammen, um so in der nachfolgenden Sammelleitung 11 die standardisierte Käsereimilch SKM zu erhalten.

Die Zufuhrleitung 5 (**Figur 3**), über die die zu behandelnde Milch M der zweiten Anlage 101 zuströmt, verzweigt sich in die erste Leitung 5.1 für den ersten Teil Milch M1 und die zweite Leitung 5.2 für den zweiten Teil Milch M2. Dabei ist das Aufteilungsverhältnis zwischen dem ersten Teil Milch M1 und dem zweiten Teil Milch M2 variabel, vorzugsweise steuerbar und durch den Verwendungszweck der Käsereimilch vorgegeben.

Die erste Leitung 5.1 ist mit der Zentrifugalabscheidereinheit 2 und die zweite Leitung 5.2 ist mit der den Bakteriengehalt steuernden Einheit 4 verbunden. Die mit der Zentrifugalabscheidereinheit 2 verbundene sechste Leitung 7 verzweigt sich in die über ein Regelventil 7.3, das das Aufteilungsverhältnis der sich verzweigenden Rahmfraktion-Ströme steuert, geführte siebte Leitung 7.1 für die Rahmfraktion RF oder einen Teil davon, den ersten Teil Rahmfraktion RF1, und in die achte Leitung 7.2 für den zweiten Teil Rahmfraktion RF2. Die mit der Zentrifugalabscheidereinheit 2 verbundene dritte Leitung 6 für die Magermilchfraktion MMF verzweigt sich in eine vierte Leitung 6.1 für einen ersten Teil Magermilchfraktion MMF1 und in eine fünfte Leitung 6.2 für einen zweiten Teil Magermilchfraktion MMF2. Die zwölfte Leitung 12 für die Ablagerungen AL mündet direkt oder über einen Endabschnitt der siebten Leitung 7.1 in die den Bakteriengehalt steuernden Einheit 4 ein.

Während die zweite Leitung 5.2 stets den zweiten Teil Milch M2 in die den Bakteriengehalt steuernden Einheit 4 einspeist, weil diese Zufuhr einen wesentlichen Teil der Erfindung ausmacht, können aus der fünften Leitung 6.2 für den zweiten Teil Magermilchfraktion MMF2, der siebten Leitung 7.1 für die Rahmfraktion RF bzw. RF1 und der zwölften Leitung 12 für die Ablagerungen AL beliebig ausgewählte Leitungen mit den zugeordneten Fluiden mit der den Bakteriengehalt steuernden Einheit 4 wahlweise verbunden sein und letzterer diese Fluide je nach der gewünschten Zusammensetzung im Endprodukt, der standardisierten Käsereimilch SKM, zuführen.

Die vierte Leitung 6.1 für den ersten Teil Magermilchfraktion MMF1 ist verbunden mit wenigstens der ersten Mikrofiltrationseinheit 3. Letztere ist weiterhin verbunden mit der neunten Leitung 8 zur Ableitung des ersten Retentats R-I und der zehnten Leitung 9 für die Ableitung des ersten Permeats P-I, wobei Retentat und Permeat durch die erste Mikrofiltration MF-I nunmehr aus dem ersten Teil Magermilchfraktion MMF1 generiert werden.

In der den Bakteriengehalt steuernden Einheit 4 können nunmehr neben dem ersten Retentat R-I und dem zweiten Teil Milch M2, jeweils variabel, vorzugsweise steuerbar und durch den Verwendungszweck der Käsereimilch vorgegeben, die Rahmfraktion RF oder ein Teil davon, der erste Teil Rahmfraktion RF1, der zweite Teil der Magermilchfraktion MMF2 und die Ablagerungen AL der den Bakteriengehalt steuernden Behandlung BSB, vorzugsweise der thermischen Behandlung durch Erhitzung oberhalb von 100 °C, unterzogen werden.

Die elfte Leitung 10 führt aus der den Bakteriengehalt steuernden Einheit 4 die Mischung entweder aus zweiten Komponenten K2, bestehend aus einem nicht filtrierten behandelten zweiten Teil Milch M2* und dem behandelten wenigstens ersten Retentat R-I*, oder aus dritten Komponenten K3, bestehend den zweiten Komponenten K2 und einer behandelten Rahmfraktion RF* oder einem behandelten ersten Teil Rahmfraktion RF1*, und zusätzlich wahlweise ergänzt durch einen behandelten zweiten Teil Magermilchfraktion MMF2* und/oder behandelte Ablagerungen AL*, ab und führt diese Bestandteile mit dem in der zehnten Leitung 9 herangeführten wenigstens ersten Permeat P-I oder dem aus der letzten Mikrofiltration resultierenden letzten Permeat zusammen, um so in der nachfolgenden Sammelleitung 11 die standardisierte Käsereimilch SKM zu erhalten.

Das Aufteilungsverhältnis zwischen dem ersten Teil Magermilchfraktion MMF1 und dem zweiten Teil Magermilchfraktion MMF2 und auch das Aufteilungsverhältnis zwischen dem ersten Teil Rahmfraktion RF1 und dem zweiten Teil Rahmfraktion RF2 ist variabel, vorzugsweise steuerbar und durch den Verwendungszweck der Käsereimilch vorgegeben.

Die mit der vorbeschriebenen ersten Anlage 100 durchführbare erste Verfahrensvariante und die mit der zweiten Anlage 101 durchführbare zweite Verfahrensvariante sind nicht auf die vorstehend jeweils konkret beschriebenen Ausgestaltungen beschränkt, sondern weitere Ausgestaltungen ergeben sich für den Fachmann aus der Vielfalt der den Anlagen 100, 101 innewohnenden Variationsmöglichkeiten.

Die erste Anlage 100 und die zweite Anlage 101 werden jeweils, bestimmt durch die Betriebsweise der vorgeordneten Prozessanlage A1 und/oder der nachgeordneten Prozessanlage C1, entweder kontinuierlich oder diskontinuierlich (Batchprozess) betrieben.

### BEZUGSZEICHENLISTE DER VERWENDETEN ABKÜRZUNGEN

**Figur 1** (Stand der Technik)
   - 1: Anlage
   - 2: Zentrifugalabscheidereinheit
   - 3: erste Mikrofiltrationseinheit (für erste Mikrofiltration MF-I)
   - 4: Bakteriengehalt steuernde Einheit (z.B. UHT-Einheit; für eine den Bakteriengehalt steuernde Behandlung BSB)
   - 5: Zufuhrleitung (für Milch M)
   - 6: dritte Leitung (für eine Magermilchfraktion MMF)
   - 7: sechste Leitung (für eine Rahmfraktion RF)
   - 7.1: siebte Leitung (für einen ersten Teil Rahmfraktion RF1)
   - 7.2: achte Leitung (für einen zweiten Teil Rahmfraktion RF2)
   - 8: neunte Leitung (für ein erstes Retentat R-I)
   - 9: zehnte Leitung (für das erste Permeat P-I oder das letzte Permeat)
   - 10: elfte Leitung (für eine behandelte Mischung aus einem behandelten ersten Retentat R-I* und einem behandelten ersten Teil Rahmfraktion RF1*; mit einer den Bakteriengehalt steuernden Behandlung BSB behandelt)
   - 11: Sammelleitung (für eine standardisierte Käsereimilch SKM)
   - 12: zwölfte Leitung (für Ablagerungen AL aus der Zentrifugierung ZF)

   - AL: Ablagerungen
   - BSB: eine den Bakteriengehalt steuernde Behandlung
   - M: (zugeführte) Milch
   - MMF: Magermilchfraktion

   - MF-I, MF-II, MF-III, MF-IV, usw.: erste, zweite, dritte, vierte, usw. Mikrofiltration
   - P-I, PII, P-III, P-IV, usw.: erstes, zweites, drittes, viertes, usw. Permeat
   - R-I, RII, R-III, R-IV, usw.: erstes, zweites, drittes, viertes, usw. Retentat

   - RF: Rahmfraktion
   - RF1: erster Teil Rahmfraktion
   - RF2: zweiter Teil Rahmfraktion

   - R-I*: behandeltes erstes Retentat
   - RF1*: behandelter erster Teil Rahmfraktion) (R-I*, RF1*: jeweils mit einer den Bakteriengehalt steuernden Behandlung BSB behandelt)

   - SKM: standardisierte Käsereimilch
   - ZF: Zentrifugierung

   - A1: vorgeordnete Prozessanlage
   - B1: Anlagenabschnitt
   - C1: nachgeordnete Prozessanlage
**Figur 2**
   - 100: erste Anlage
   - 5.1: erste Leitung (für einen ersten Teil Milch M1)
   - 5.2: zweite Leitung (für einen zweiten Teil Milch M2)
   - 10: elfte Leitung (für eine behandelte Mischung aus den ersten Komponenten K1; mit einer den Bakteriengehalt steuernden Behandlung BSB behandelt)

   - K1: erste Komponenten (bestehend aus einem behandelten ersten Retentat R-I* und einem behandelten zweiten Teil Milch M2*)
   - M1: erster Teil Milch
   - M2: zweiter Teil Milch

   - M2*: behandelter zweiter Teil Milch (mit einer den Bakteriengehalt steuernden Behandlung BSB behandelt)

   - B100: erster Anlagenabschnitt
**Figur 3**
   - 101: zweite Anlage
   - 6.1: vierte Leitung (für einen ersten Teil Magermilchfraktion MMF1)
   - 6.2: fünfte Leitung (für einen zweiten Teil Magermilchfraktion MMF2)
   - 7.3: Regelventil
   - 10: elfte Leitung (für eine behandelte Mischung aus den zweiten Komponenten K2 oder den dritten Komponenten K3 (mit einer den Bakteriengehalt steuernden Behandlung BSB behandelt)

   - AL*: behandelte Ablagerungen

   - K2: zweite Komponenten (bestehend aus einem behandelten zweiten Teil Milch M2* und einem behandelten ersten Retentat R-I*)
   - K3: dritte Komponenten (bestehend aus einem behandelten zweiten Teil Milch M2* und einem behandelten ersten Retentat R-I* und einer behandelten Rahmfraktion RF* oder einem behandelten ersten Teil Rahmfraktion RF1*)

   - MMF1: erster Teil Magermilchfraktion
   - MMF2: zweiter Teil Magermilchfraktion

   - MMF2*: behandelter zweiter Teil Magermilchfraktion

   - RF*: behandelte Rahmfraktion (AL*, MMF2*, RF*: jeweils mit einer den Bakteriengehalt steuernden Behandlung BSB behandelt)

   - B101: zweiter Analgenabschnitt

## Patentansprüche

1. Verfahren zur Behandlung von Milch zur Herstellung von Käsereimilch mit einem reduzierten Gehalt an Keimen und Bakterien, wobei die zugeführte Milch (M) wenigstens einer ersten Mikrofiltration (MF-I) unterzogen wird, die zu einer Auftrennung in wenigstens ein Keime und Bakterien enthaltendes erstes Retentat (R-I) und in wenigstens ein erstes Permeat (P-I) mit einem reduzierten Gehalt an Keimen und Bakterien führt, wobei das wenigstens erste Retentat (R-I) einer den Bakteriengehalt steuernden Behandlung (BSB) unterzogen wird, wobei es sich bei dieser um eine thermische Behandlung durch Erhitzung oberhalb von 100 °C handelt, und wobei auf die den Bakteriengehalt steuernden Behandlung (BSB) des wenigstens ersten Retentats (R-I) eine Mischung des wenigstens ersten Retentats (R-I) mit dem wenigstens ersten Permeat (P-I) oder dem aus der letzten Mikrofiltration resultierenden letzten Permeat folgt,
**dadurch gekennzeichnet,**
• **dass** die zugeführte Milch (M) in einen ersten Teil Milch (M1) und einen zweiten Teil Milch (M2) aufgeteilt wird,
• **dass** der erste Teil Milch (M1) wenigstens der ersten Mikrofiltration (MF-I) unterzogen wird,
• **dass** der zweite Teil Milch (M2) mit dem wenigsten ersten Retentat (R-I) aus der wenigstens ersten Mikrofiltration (MF-I) der gemeinsamen, den Bakteriengehalt steuernden Behandlung (BSB) unterzogen wird,
• **dass** die derart behandelte Mischung aus ersten Komponenten (K1), bestehend aus einem nicht filtrierten behandelten zweiten Teil Milch (M2*) und einem behandelten wenigstens ersten Retentat (R-I*), mit dem wenigstens ersten Permeat (P-I) oder dem aus der letzten Mikrofiltration resultierenden letzten Permeat zusammengeführt wird, um so standardisierte Käsereimilch (SKM) zu erhalten, und
• **dass** das Aufteilungsverhältnis zwischen dem ersten Teil Milch (M1) und dem zweiten Teil Milch (M2) variabel und durch den Verwendungszweck der Käsereimilch vorgegeben ist.

2. Verfahren zur Behandlung von Milch zur Herstellung von Käsereimilch mit einem reduzierten Gehalt an Keimen und Bakterien, wobei die zugeführte Milch (M) einer Zentrifugierung (ZF) unterzogen wird, die eine Auftrennung in eine Keime und Bakterien enthaltende Rahmfraktion (RF) und eine Keime und Bakterien enthaltende Magermilchfraktion (MMF) bewirkt, wobei die Magermilchfraktion (MMF) wenigstens einer ersten Mikrofiltration (MF-I) unterzogen wird, die zu einer Auftrennung in wenigstens ein Keime und Bakterien enthaltendes erstes Retentat (R-I) und in wenigstens ein erstes Permeat (P-I) mit einem reduzierten Gehalt an Keimen und Bakterien führt, wobei das wenigstens erste Retentat (R-I) aus der wenigstens ersten Mikrofiltration (MF-I) und die Rahmfraktion (RF) oder ein Teil davon (RF1) einer gemeinsamen, den Bakteriengehalt steuernden Behandlung (BSB) unterzogen wird, wobei es sich bei dieser um eine thermische Behandlung durch Erhitzung oberhalb von 100 °C handelt, und wobei die derart behandelte Mischung, bestehend aus einem behandelten ersten Retentat (R-I*) und einer behandelten Rahmfraktion (RF*) oder einem behandelten Teil davon (RF1*), mit dem wenigstens ersten Permeat (P-I) oder dem aus der letzten Mikrofiltration resultierenden letzten Permeat zusammengeführt und vermischt wird,
**dadurch gekennzeichnet,**
• **dass** die zugeführte Milch (M) in einen ersten Teil Milch (M1) und einen zweiten Teil Milch (M2) aufgeteilt wird,
• **dass** der erste Teil Milch (M1) der Zentrifugierung (ZF) unterzogen wird,
• **dass** der zweite Teil Milch (M2) zusammen
∘ entweder mit dem wenigsten ersten Retentat (R-I) aus der wenigstens ersten Mikrofiltration (MF-I)
∘ oder mit dem wenigsten ersten Retentat (R-I) und zusätzlich mit der Rahmfraktion (RF) oder einem ersten Teil Rahmfraktion (RF1)
der den Bakteriengehalt steuernden Behandlung (BSB) unterzogen wird,
• und **dass** die derart behandelte Mischung aus
∘ entweder zweiten Komponenten (K2), bestehend aus einem nicht zentrifugierten behandelten zweiten Teil Milch (M2*) und einem behandelten wenigstens ersten Retentat (R-I*),
o oder dritten Komponenten (K3), bestehend aus den zweiten Komponenten (K2) und einer behandelten Rahmfraktion (RF) oder einem behandelten ersten Teil Rahmfraktion (RF1*),
mit dem wenigstens ersten Permeat (P-I) oder dem aus der letzten Mikrofiltration resultierenden letzten Permeat zusammengeführt und vermischt wird, um so standardisierte Käsereimilch (SKM) zu erhalten, und
• **dass** das Aufteilungsverhältnis zwischen dem ersten Teil Milch (M1) und dem zweiten Teil Milch (M2) variabel und durch den Verwendungszweck der Käsereimilch vorgegeben ist.

3. Verfahren nach Anspruch 2,
**dadurch gekennzeichnet,**
**dass** die aus der Zentrifugierung (ZF) gewonnene, nicht filtrierte Magermilchfraktion (MMF) in einen ersten Teil Magermilchfraktion (MMF1) und einen zweiten Teil Magermilchfraktion (MMF2) aufgeteilt wird, dass der erste Teil Magermilchfraktion (MMF1) wenigstens der ersten Mikrofiltration (MF-I) unterzogen wird, und dass der zweite Teil Magermilchfraktion (MMF2) der den Bakteriengehalt steuernden Behandlung (BSB) unterzogen und zusammen
• entweder mit der Mischung aus den zweiten Komponenten (K2)
• oder mit der Mischung aus den dritten Komponenten (K3) weiterbehandelt wird.

4. Verfahren nach Anspruch 3,
**dadurch gekennzeichnet,**
**dass** das Aufteilungsverhältnis zwischen dem ersten Teil Magermilchfraktion (MMF1) und dem zweiten Teil Magermilchfraktion (MMF2) variabel und durch den Verwendungszweck der Käsereimilch vorgegeben ist.

5. Verfahren nach einem der Ansprüche 2 bis 4,
**dadurch gekennzeichnet,**
**dass** das Aufteilungsverhältnis zwischen dem ersten Teil Rahmfraktion (RF1) und dem zweiten Teil Rahmfraktion (RF2) variabel und durch den Verwendungszweck der Käsereimilch vorgegeben ist.

6. Verfahren nach einem der Ansprüche 2 bis 5,
**dadurch gekennzeichnet,**
**dass** bei der Zentrifugierung (ZF) anfallende Ablagerungen (AL) der den Bakteriengehalt steuernden Behandlung (BSB) unterzogen und zusammen
• entweder mit der Mischung aus den zweiten Komponenten (K2)
• oder mit der Mischung aus den dritten Komponenten (K3) weiterbehandelt werden.

7. Verfahren nach Anspruch 3,
**dadurch gekennzeichnet,**
**dass** bei der Zentrifugierung (ZF) anfallende Ablagerungen (AL) zusammen mit dem zweiten Teil Magermilchfraktion (MMF2) der den Bakteriengehalt steuernden Behandlung (BSB) unterzogen und zusammen
• entweder mit der Mischung aus den zweiten Komponenten (K2)
• oder mit der Mischung aus den dritten Komponenten (K3) weiterbehandelt wird.

8. Verfahren nach einem der Ansprüche 2 bis 7,
**dadurch gekennzeichnet,**
**dass** der Anteil der zweiten Komponente (K2) oder der dritten Komponente (K3), bezogen auf die Menge zugeführte Milch (M), bis zu 20 Prozent beträgt, und dass die Ergänzung auf den Anteil von bis zu 20 Prozent durch den behandelten zweiten Teil Milch (M2*) erfolgt.

9. Verfahren nach einem der vorhergehenden Ansprüche,
**dadurch gekennzeichnet,**
**dass** die den Bakteriengehalt steuernde Behandlung (BSB) bei Temperaturen zwischen 125 und 140 Grad Celsius durchgeführt wird.

10. Verfahren nach einem der vorhergehenden Ansprüche,
**dadurch gekennzeichnet,**
**dass** bei einer Mikrofiltrierung in mehr als einer hintereinander geschalteten Mikrofiltration ein jeweiliges Retentat (R-II; R-III; R-IV; ...), generiert aus einer zweiten (MF-II) und jeder weiteren Mikrofiltration (MF-III; MF-IV; ...), jeweils der vorhergehenden Mikrofiltration zugeführt wird.

11. Verfahren nach einem der vorhergehenden Ansprüche,
**dadurch gekennzeichnet,**
**dass** bei einer Mikrofiltrierung in mehr als einer hintereinander geschalteten Mikrofiltration die jeweiligen Retentate (R-II; R-III; R-IV; ...), generiert aus einer zweiten (MF-II) und jeder weiteren Mikrofiltration (MF-III; MF-IV; ...), entweder getrennt voneinander der ersten Mikrofiltration (MF-I) zugeführt werden oder zusammengeführt sind und die Mischung daraus der ersten Mikrofiltration (MF-I) zugeführt wird.

12. Anlage zur Behandlung von Milch zur Herstellung von standardisierter Käsereimilch (SKM) mit einem reduzierten Gehalt an Keimen und Bakterien, wobei eine erste Anlage (100) aufweist:
• eine Zufuhrleitung (5) für Milch (M), die sich in einer ersten Leitung (5.1) für einen ersten Teil Milch (M1) fortsetzt und verbunden ist mit
• wenigstens einer ersten Mikrofiltrationseinheit (3; MF-I) zum Auftrennen des ersten Teils Milch (M1) in ein Keime und Bakterien enthaltendes erstes Retentat (R-I) und ein erstes Permeat (P-I) mit einem reduzierten Gehalt an Keimen und Bakterien,
• wobei die Mikrofiltrationseinheit (3; MF-I) verbunden ist mit einer neunten Leitung (8) für das erste Retentat (R-I) und einer zehnten Leitung (9) für das erste Permeat (P-I),
• wobei die neunte Leitung (8) verbunden ist mit einer den Bakteriengehalt steuernden Einheit (4; BSB), in der eine thermische Behandlung durch Erhitzung oberhalb von 100 °C durchgeführt wird, und die neunte Leitung (8) wiederum verbunden ist mit einer elften Leitung (10) für das in der den Bakteriengehalt steuernden Einheit (4; BSB) behandelte erste Retentat (R-I*),
• und wobei die zehnte Leitung (9) und die elfte Leitung (10) zusammengeführt sind und sich danach fortsetzen in einer Sammelleitung (11) für das behandelte erste Retentat (R-I*) und für das wenigstens erste Permeat (P-I) oder für das aus der letzten Mikrofiltration resultierende letzte Permeat,
**dadurch gekennzeichnet,**
**dass** am Übergang von der Zufuhrleitung (5) zur ersten Leitung (5.1) eine zweite Leitung (5.2) für einen zweiten Teil Milch (M2) abzweigt und die zweite Leitung (5.2) verbunden ist mit der den Bakteriengehalt steuernden Einheit (4; BSB), wobei die Verzweigung derart ist,
**dass** die Aufteilung in den ersten Teil Milch (M1) und den zweiten Teil Milch (M2) variierbar ist.

13. Anlage nach Anspruch 12, wobei eine zweite Anlage (101) gegenüber der ersten Anlange (100) **dadurch gekennzeichnet ist,**
• **dass** die erste Leitung (5.1) für den ersten Teil Milch (M1) verbunden ist mit einer Zentrifugalabscheidereinheit (2; ZF) zum Auftrennen des ersten Teils Milch (M1) in eine Keime und Bakterien enthaltende Rahmfraktion (RF) und eine Keime und Bakterien enthaltende Magermilchfraktion (MMF),
• **dass** die Zentrifugalabscheidereinheit (2; ZF) jeweils verbunden ist mit einer dritten Leitung (6) für die Magermilchfraktion (MMF), mit einer sechsten Leitung (7) für die Rahmfraktion (RF) und mit einer zwölften Leitung (12) für Ablagerungen (AL) in der Zentrifugalabscheidereinheit (2; ZF),
• **dass** sich die dritte Leitung (6) verzweigt in eine vierte Leitung (6.1) für einen ersten Teil Magermilchfraktion (MMF1) und in eine fünfte Leitung (6.2) für einen zweiten Teil Magermilchfraktion (MMF2),
• **dass** sich die sechste Leitung (7) verzweigt in eine über ein Regelventil (7.3) geführte siebte Leitung (7.1) für einen ersten Teil Rahmfraktion (RF1) und in eine achte Leitung (7.2) für einen zweiten Teil Rahmfraktion (RF2),
• **dass** die vierte Leitung (6.1) verbunden ist mit wenigstens der ersten Mikrofiltrationseinheit (3; MF-I) und
• **dass** aus der fünften (6.2), der siebten (7.1) und der zwölften Leitung (12) beliebig ausgewählte Leitungen mit der den Bakteriengehalt steuernden Einheit (4; BSB) verbunden sein können.

14. Anlage nach Anspruch 12 oder 13,
**dadurch gekennzeichnet,**
**dass** mehr als eine in Reihe geschaltete Mikrofiltrationseinheit (3; MF-I; MF-II; MF-III; MF-IV; ...) vorgesehen sind, und dass eine jeweilige Retentatleitung 8 einer zweiten (3; MF-II) und jeder weiteren Mikrofiltrationseinheit (3; MF-III; MF-IV; ...) jeweils in Form einer Rückführleitung mit einer Zufuhrleitung der vorhergehenden Mikrofiltrationseinheit verbunden ist.

15. Anlage nach Anspruch 12 oder 13,
**dadurch gekennzeichnet,**
**dass** mehr als eine in Reihe geschaltete Mikrofiltrationseinheit (3; MF-I; MF-II; MF-III; MF-IV; ...) vorgesehen sind, und dass die jeweiligen Retentatleitungen 8 einer zweiten (3; MF-II) und jeder weiteren Mikrofiltrationseinheit (3; MF-III; MF-IV; ...) entweder getrennt voneinander mit einer Zufuhrleitung der ersten Mikrofiltrationseinheit (3; MF-I) verbunden sind oder in einer Retentat-Sammelleitung zusammengeführt sind und diese mit der Zufuhrleitung der ersten Mikrofiltrationseinheit (3; MF-I) verbunden ist.

## Claims

1. A method for the treatment of milk for the production of cheesemaking milk having a reduced content of germs and bacteria, wherein the supplied milk (M) is subjected to at least a first microfiltration (MF-I), which results in a separation into at least a first retentate (R-I) containing germs and bacteria and into at least a first permeate (P-I) having a reduced content of germs and bacteria, wherein the at least first retentate (R-I) is subjected to a bacterial content controlling treatment (BSB), wherein this is a thermal treatment by heating the milk to above 100°C, and wherein a mixture of the at least first retentate (R-I) with the at least first permeate (P-I) or the last permeate resulting from the last microfiltration follows the bacterial content controlling treatment (BSB) of the at least first retentate (R-I),
**characterized in that**
• the supplied milk (M) is subdivided into a first milk portion (M1) and a second milk portion (M2),
• the first milk portion (M1) is subjected to at least the first microfiltration (MF-I),
• the second milk portion (M2) having the at least first retentate (R-I) from the at least first microfiltration (MF-I) is subjected to the joint bacterial content controlling treatment (BSB),
• the mixture treated this way and consisting of first components (K1), which consist of a non-filtered treated second milk portion (M2*) and a treated at least first retentate (R-I*), is combined with the at least first permeate (P-I) or the last permeate resulting from the last microfiltration, in order to thus obtain standardized cheesemaking milk (SKM), and
• the division ratio between the first milk portion (M1) and the second milk portion (M2) is variable and is predefined by the intended purpose of the cheesemaking milk.

2. The method for the treatment of milk for the production of cheesemaking milk having a reduced content of germs and bacteria, wherein the supplied milk (M) is subjected to a centrifuging (ZF) which causes it to separate into a cream fraction (RF) containing germs and bacteria and a skim milk fraction (MMF) containing germs and bacteria, wherein the skim milk fraction (MMF) is subjected to at least a first microfiltration (MF-I), which results in a separation into at least a first retentate (R-I) containing germs and bacteria and into at least a first permeate (P-I) having a reduced content of germs and bacteria, wherein the at least first retentate (R-I) from the at least first microfiltration (MF-I) and the cream fraction (RF) or a portion thereof (RF1) are subjected to a joint bacterial content controlling treatment (BSB), wherein this is a thermal treatment by heating the milk to above 100°C, and wherein the mixture treated this way, consisting of a treated first retentate (R-I*) and a treated cream fraction (RF*) or a treated portion thereof (RF1*), is combined and mixed with the at least first permeate (P-I) or the last permeate resulting from the last microfiltration,
**characterized in that**
• the supplied milk (M) is subdivided into a first milk portion (M1) and a second milk portion (M2),
• the first milk portion (M1) is subjected to the centrifuging (ZF),
• the second milk portion (M2) is subjected to the bacterial content controlling treatment (BSB) together
∘ either with the at least first retentate (R-I) from the at least first microfiltration (MF-I)
∘ or with the at least first retentate (R-I) and additionally with the cream fraction (RF) or a first portion of cream fraction (RF1),
• and the mixture treated this way and consisting of
∘ either second components (K2) which consist of a non-centrifuged treated second milk portion (M2*) and a treated at least first retentate (R-I*),
∘ or third components (K3) which consist of the second components (K2) and a treated cream fraction (RF) or a treated first portion of cream fraction (RF1*),
is combined and mixed with the at least first permeate (P-I) or the last permeate resulting from the last microfiltration, in order to thus obtain standardized cheesemaking milk (SKM), and
• the division ratio between the first milk portion (M1) and the second milk portion (M2) is variable and is predefined by the intended purpose of the cheesemaking milk.

3. The method according to Claim 2,
**characterized in that**
the non-filtered skim milk fraction (MMF) obtained from the centrifuging (ZF) is subdivided into a first portion of skim milk fraction (MMF1) and a second portion of skim milk fraction (MMF2), the first portion of skim milk fraction (MMF1) is subjected to at least the first microfiltration (MF-I), and the second portion of skim milk fraction (MMF2) is subjected to the bacterial content controlling treatment (BSB) and is further treated together
• either with the mixture consisting of the second components (K2)
• or with the mixture consisting of the third components (K3).

4. The method according to Claim 3,
**characterized in that**
the division ratio between the first portion of skim milk fraction (MMF1) and the second portion of skim milk fraction (MMF2) is variable and is predefined by the intended purpose of the cheesemaking milk.

5. The method according to any one of Claims 2 to 4,
**characterized in that**
the division ratio between the first portion of cream fraction (RF1) and the second portion of cream fraction (RF2) is variable and is predefined by the intended purpose of the cheesemaking milk.

6. The method according to any one of Claims 2 to 5,
**characterized in that**
deposits (AL) occurring during the centrifuging (ZF) are subjected to the bacterial content controlling treatment (BSB) and are further treated together
• either with the mixture consisting of the second components (K2)
• or with the mixture consisting of the third components (K3).

7. The method according to Claim 3,
**characterized in that**
deposits (AL) occurring during the centrifuging (ZF) are subjected together with the second portion of skim milk fraction (MMF2) to the bacterial content controlling treatment (BSB) and are further treated together
• either with the mixture consisting of the second components (K2)
• or with the mixture consisting of the third components (K3).

8. The method according to any one of Claims 2 to 7,
**characterized in that**
the proportion of the second component (K2) or the third component (K3), based on the quantity of supplied milk (M), is up to 20 per cent, and the addition to the proportion of up to 20 per cent is effected by the treated second milk portion (M2*).

9. The method according to any one of the preceding claims,
**characterized in that**
the bacterial content controlling treatment (BSB) is performed at temperatures between 125 and 140 degrees Celsius.

10. The method according to any one of the preceding claims,
**characterized in that**
during a microfiltering in more than one series-connected microfiltration a respective retentate (R-II; R-III; R-IV; ...), generated from a second (MF-II) and each further microfiltration (MF-III; MF-IV; ...) is, in each case, supplied to the preceding microfiltration.

11. The method according to any one of the preceding claims,
**characterized in that**
during a microfiltering in more than one series-connected microfiltration the respective retentates (R-II; R-III; R-IV; ...), generated from a second (MF-II) and each further microfiltration (MF-III; MF-IV; ...) are either supplied, separately from one another, to the first microfiltration (MF-I) or are combined, and the mixture thereof is supplied to the first microfiltration (MF-I).

12. An installation for the treatment of milk for the production of standardized cheesemaking milk (SKM) having a reduced content of germs and bacteria, wherein a first installation (100) has:
• a supply line (5) for milk (M), which continues in a first line (5.1) for a first milk portion (M1) and is connected to
• at least a first microfiltration unit (3; MF-I) for separating the first milk portion (M1) into a first retentate (R-I) containing germs and bacteria and a first permeate (P-I) having a reduced content of germs and bacteria,
• wherein the microfiltration unit (3; MF-I) is connected to a ninth line (8) for the first retentate (R-I) and to a tenth line (9) for the first permeate (P-I),
• wherein the ninth line (8) is connected to a bacterial content controlling unit (4; BSB), in which a thermal treatment is performed by heating the milk to above 100°C, and the ninth line (8) is, in turn, connected to an eleventh line (10) for the first retentate (R-I*) treated in the bacterial content controlling unit (4; BSB),
• and wherein the tenth line (9) and the eleventh line (10) are combined and thereafter continue in a collecting line (11) for the treated first retentate (R-I*) and for the at least first permeate (P-I) or for the last permeate resulting from the last microfiltration,
**characterized in that**
a second line (5.2) for a second milk portion (M2) branches off at the transition from the supply line (5) to the first line (5.1), and the second line (5.2) is connected to the bacterial content controlling unit (4; BSB), wherein the branch is such that the subdivision into the first milk portion (M1) and the second milk portion (M2) can be varied.

13. The installation according to Claim 12, wherein a second installation (101) opposite the first installation (100) is **characterized in that**
• the first line (5.1) for the first milk portion (M1) is connected to a centrifugal separator unit (2; ZF) for separating the first milk portion (M1) into a cream fraction (RF) containing germs and bacteria and a skim milk fraction (MMF) containing germs and bacteria,
• the centrifugal separator unit (2; ZF) is, in each case, connected to a third line (6) for the skim milk fraction (MMF), to a sixth line (7) for the cream fraction (RF) and to a twelfth line (12) for deposits (AL) in the centrifugal separator unit (2; ZF),
• the third line (6) branches out into a fourth line (6.1) for a first portion of skim milk fraction (MMF1) and into a fifth line (6.2) for a second portion of skim milk fraction (MMF2),
• the sixth line (7) branches out into a seventh line (7.1) for a first portion of cream fraction (RF1), which is guided by means of a control valve (7.3), and into an eight line (7.2) for a second portion of cream fraction (RF2),
• the fourth line (6.1) is connected to at least the first microfiltration unit (3; MF-I), and
• any selected lines from the fifth (6.2), the seventh (7.1) and the twelfth lines (12) can be connected to the bacterial content controlling unit (4; BSB).

14. The installation according to Claim 12 or 13,
**characterized in that**
more than one serially connected microfiltration unit (3; MF-I; MF-II; MF-III; MF-IV; ...) are provided, and a respective retentate line 8 of a second (3; MF-II) and each further microfiltration unit (3; MF-III; MF-IV; ...) are, in each case, connected in the form of a return line to a supply line of the preceding microfiltration unit.

15. The installation according to Claim 12 or 13,
**characterized in that**
more than one serially connected microfiltration unit (3; MF-I; MF-II; MF-III; MF-IV; ...) are provided, and the respective retentate lines 8 of a second (3; MF-II) and each further microfiltration unit (3; MF-III; MF-IV; ...) are either connected separately from one another to a supply line of the first microfiltration unit (3; MF-I) or are combined in a retentate collecting line, and said retentate collecting line is connected to the supply line of the first microfiltration unit (3; MF-I).

## Revendications

1. Procédé de traitement du lait pour produire du lait de fromagerie à teneur réduite en germes et bactéries, dans lequel le lait amené (M) est soumis au moins à une première microfiltration (MF-I), qui aboutit à une séparation en au moins un premier rétentat (R-I) contenant des germes et des bactéries et en au moins un premier perméat (P-I) à teneur réduite en germes et bactéries, dans lequel ledit premier rétentat (R-I) au moins est soumis à un traitement régulant la teneur en bactéries (BSB), sachant que ce traitement consiste en un traitement thermique par chauffe à une température supérieure à 100 °C, et dans lequel un mélange dudit premier rétentat (R-I) au moins avec ledit premier perméat (P-I) au moins ou avec le dernier perméat résultant de la dernière microfiltration fait suite au traitement régulant la teneur en bactéries (BSB) dudit premier rétentat (R-I) au moins,
**caractérisé en ce que**
• le lait amené (M) est divisé en une première partie de lait (M1) et en une seconde partie de lait (M2),
• la première partie de lait (M1) est soumise au moins à la première microfiltration (MF-I),
• la seconde partie de lait (M2) avec au moins le premier rétentat (R-I) issu au moins de la première microfiltration (MF-I) est soumise au traitement commun régulant la teneur en bactéries (BSB),
• le mélange ainsi traité à base de premiers constituants (K1) composés d'une seconde partie de lait traitée non filtrée (M2*) et d'au moins un premier rétentat traité (R-I*), est réuni avec au moins le premier perméat (P-I) ou le dernier perméat résultant de la dernière microfiltration pour obtenir ainsi du lait de fromagerie standardisé (SKM), et
• le rapport de répartition entre la première partie de lait (M1) et la seconde partie de lait (M2) est variable et prédéfini par l'utilisation prévue du lait de fromagerie.

2. Procédé de traitement du lait pour produire du lait de fromagerie à teneur réduite en germes et bactéries, dans lequel le lait amené (M) est soumis à une centrifugation (ZF), qui induit une séparation en une fraction de crème (RF) contenant des germes et des bactéries et une fraction de lait écrémé (MMF) contenant des germes et des bactéries, dans lequel la fraction de lait écrémé (MMF) est soumise au moins à une première microfiltration (MF-I), qui aboutit à une séparation en au moins un premier rétentat (R-I) contenant des germes et des bactéries et en au moins un premier perméat (P-I) à teneur réduite en germes et bactéries, dans lequel le premier rétentat (R-I) issu au moins de la première microfiltration (MF-I) et la fraction de crème (RF) ou une partie de celle-ci (RF1) sont soumis à un traitement commun régulant la teneur en bactéries (BSB), sachant que ce traitement consiste en un traitement thermique par chauffe à une température supérieure à 100 °C, et dans lequel le mélange ainsi traité, constitué d'un premier rétentat traité (R-I*) et d'une fraction de crème traitée (RF*) ou d'une partie de celle-ci traitée (RF1*), est réuni et mélangé avec au moins le premier perméat (P-I) ou le dernier perméat résultant de la dernière microfiltration,
**caractérisé en ce que**
• le lait amené (M) est divisé en une première partie de lait (M1) et en une seconde partie de lait (M2),
• la première partie de lait (M1) est soumise à la centrifugation (ZF),
• la seconde partie de lait (M2) est soumise conjointement
∘ soit avec au moins le premier rétentat (R-I) issu au moins de la première microfiltration (MF-I)
∘ soit avec au moins le premier rétentat (R-I) et en plus avec la fraction de crème (RF) ou une première partie de la fraction de crème (RF1)
au traitement commun régulant la teneur en bactéries (BSB),
• le mélange ainsi traité à base
∘ soit de deuxièmes constituants (K2) composés d'une seconde partie de lait traitée (M2*) non centrifugée et d'un au moins premier rétentat traité (R-I*),
∘ soit de troisièmes constituants (K3) composés des deuxièmes constituants (K2) et d'une fraction de crème traitée (RF) ou d'une première partie de fraction de crème traitée (RF1*),
est réuni et mélangé avec au moins le premier perméat (P-I) ou avec le dernier perméat résultant de la dernière microfiltration pour obtenir ainsi du lait de fromagerie standardisé (SKM), et
• le rapport de répartition entre la première partie de lait (M1) et la seconde partie de lait (M2) est variable et prédéfini par l'utilisation prévue du lait de fromagerie.

3. Procédé selon la revendication 2,
**caractérisé en ce que**
la fraction de lait écrémé (MMF) non filtrée, extraite par centrifugation (ZF) est divisée en une première partie de fraction de lait écrémé (MMF1) et en une seconde partie de fraction de lait écrémé (MMF2), que la première partie de fraction de lait écrémé (MMF1) est soumise au moins à la première microfiltration (MF-I) et que la seconde partie de fraction de lait écrémé (MMF2) est soumise au traitement régulant la teneur en bactéries (BSB) et à un traitement ultérieur conjointement
• soit avec le mélange à base des deuxièmes constituants (K2),
• soit avec le mélange à base des troisièmes constituants (K3).

4. Procédé selon la revendication 3,
**caractérisé en ce que**
le rapport de répartition entre la première partie de fraction de lait écrémé (MMF1) et la seconde partie de fraction de lait écrémé (MMF2) est variable et prédéfini par l'utilisation prévue du lait de fromagerie.

5. Procédé selon l'une des revendications 2 à 4,
**caractérisé en ce que**
le rapport de répartition entre la première partie de fraction de crème (RF1) et la seconde partie de fraction de crème (RF2) est variable et prédéfini par l'utilisation prévue du lait de fromagerie.

6. Procédé selon l'une des revendications 2 à 5,
**caractérisé en ce que**
les dépôts (AL) générés par la centrifugation (ZF) sont soumis au traitement régulant la teneur en bactéries (BSB) et à un traitement ultérieur conjointement
• soit avec le mélange à base des deuxièmes constituants (K2),
• soit avec le mélange à base des troisièmes constituants (K3).

7. Procédé selon la revendication 3,
**caractérisé en ce que**
les dépôts (AL) générés par la centrifugation (ZF) conjointement avec la seconde partie de fraction de lait écrémé (MMF2) sont soumis au traitement régulant la teneur en bactéries (BSB) et à un traitement ultérieur conjointement
• soit avec le mélange à base des deuxièmes constituants (K2),
• soit avec le mélange à base des troisièmes constituants (K3).

8. Procédé selon l'une des revendications 2 à 7,
**caractérisé en ce que**
la part des deuxièmes constituants (K2) ou des troisièmes constituants (K3), rapportée à la quantité de lait amené (M), peut atteindre 20 pour cent et que le complément sur la part allant jusqu'à 20 pour cent s'effectue au moyen de la seconde partie de lait traitée (M2*).

9. Procédé selon l'une des revendications précédentes,
**caractérisé en ce que**
le traitement régulant la teneur en bactéries (BSB) est exécuté à des températures comprises entre 125 et 140 degrés Celsius.

10. Procédé selon l'une des revendications précédentes,
**caractérisé en ce que**
un rétentat respectif (R-II ; R-III ; R-IV ; ...) généré d'une deuxième (MF-II) et de chaque autre microfiltration (MF-III ; MF-IV ; ...) est amené respectivement vers la microfiltration précédente lors d'une microfiltration dans plusieurs unités de microfiltration commutées consécutivement.

11. Procédé selon l'une des revendications précédentes,
**caractérisé en ce que**
les rétentats respectifs (R-II ; R-III ; R-IV ; ...) générés d'une deuxième (MF-II) et de chaque autre microfiltration (MF-III ; MF-IV ; ...) sont amenés, soit séparément les uns des autres, vers la première microfiltration (MF-I) ou bien sont réunis et le mélange en résultant est amené vers la première microfiltration (MF-I) lors d'une microfiltration dans plusieurs unités de microfiltration commutées consécutivement.

12. Installation de traitement du lait pour produire du lait de fromagerie standardisé (SKM) à teneur réduite en germes et bactéries, dans laquelle une première installation (100) présente :
• une conduite d'amenée (5) destinée au lait (M), qui se prolonge dans une première conduite (5.1) destinée à une première partie de lait (M1) et est reliée à
• au moins une première unité de microfiltration (3 ; MF-I) pour séparer la première partie de lait (M1) en un premier rétentat (R-I) contenant des germes et des bactéries et en un premier perméat (P-I) à teneur réduite en germes et bactéries,
• dans laquelle l'unité de microfiltration (3 ; MF-I) est reliée à une neuvième conduite (8) destinée au premier rétentat (R-I) et à une dixième conduite (9) destinée au premier perméat (P-I),
• dans laquelle la neuvième conduite (8) est relié à une unité régulant la teneur en bactéries (4 ; BSB), à l'intérieur de laquelle un traitement thermique est exécuté par chauffe à une température supérieure à 100 °C, et la neuvième conduite (8) est de nouveau reliée à une onzième conduite (10) destinée au premier rétentat traité (R-I*) dans l'unité régulant la teneur en bactéries (4 ; BSB),
• et dans laquelle la dixième conduite (9) et la onzième conduite (10) sont réunies et se prolongent ensuite dans une conduite collectrice (11) destinée au premier rétentat traité (R-I*) et au premier perméat (P-I) au moins ou bien au dernier perméat résultant de la dernière microfiltration,
**caractérisée en ce que**
une deuxième conduite (5.2) destinée à une seconde partie de lait (M2) bifurque à la jonction de la conduite d'amenée (5) avec la première conduite (5.1) et que la deuxième conduite (5.2) est reliée à l'unité régulant la teneur en bactéries (4 ; BSB), dans laquelle le branchement est tel
que la répartition entre la première partie de lait (M1) et la seconde partie de lait (M2) est variable.

13. Installation selon la revendication 12, dans laquelle une seconde installation (101) est **caractérisée par** rapport à la première installation (100) **en ce que**,
• la première conduite (5.1) destinée à la première partie de lait (M1) est reliée à une unité de séparation centrifuge (2 ; ZF) pour séparer la première partie de lait (M1) en une fraction de crème (RF) contenant des germes et des bactéries et une fraction de lait écrémé (MMF) contenant des germes et des bactéries,
• l'unité de séparation centrifuge (2 ; ZF) est reliée respectivement à une troisième conduite (6) destinée à la fraction de lait écrémé (MMF), à une sixième conduite (7) destinée à la fraction de crème (RF) et à une douzième conduite (12) destinée aux dépôts (AL) dans l'unité de séparation centrifuge (2 ; ZF),
• la troisième conduite (6) bifurque dans une quatrième conduite (6.1) destinée à une première partie de fraction de lait écrémé (MMF1) et dans une cinquième conduite (6.2) destinée à une seconde partie de fraction de lait écrémé (MMF2),
• la sixième conduite (7) bifurque dans une septième conduite (7.1) guidée via une vanne de régulation (7.3), destinée à une première partie de fraction de crème (RF1) et dans une huitième conduite (7.2) destinée à une seconde partie de fraction de crème (RF2),
• la quatrième conduite (6.1) est reliée à la première unité de microfiltration (3 ; MF-I) au moins et
• des conduites sélectionnées librement parmi la cinquième (6.2), la septième (7.1) et la douzième conduite (12) peuvent être reliées à l'unité régulant la teneur en bactéries (4 ; BSB).

14. Installation selon la revendication 12 ou 13,
**caractérisée en ce que**
plusieurs unités de microfiltration montées en série (3 ; MF-I ; MF-II ; MF-III ; MF-IV ; ...) sont prévues, et qu'une conduite de rétentat respective 8 d'une deuxième (3 ; MF-II) et de chaque autre unité de microfiltration (3 ; MF-III ; MF-IV ; ...) est reliée respectivement sous la forme d'une conduite de retour à une conduite d'amenée de l'unité de microfiltration précédente.

15. Installation selon la revendication 12 ou 13,
**caractérisée en ce que**
plusieurs unités de microfiltration montées en série (3 ; MF-I ; MF-II ; MF-III ; MF-IV ; ...) sont prévues, et que les conduites de rétentat respectives 8 d'une deuxième (3 ; MF-II) et de chaque autre unité de microfiltration (3 ; MF-III ; MF-IV ; ...) sont reliées soit séparément les unes des autres à une conduite d'amenée de la première unité de microfiltration série (3 ; MF-I) ou sont réunies dans une conduite collectrice de rétentat et que celle-ci est reliée à la conduite d'amenée de la première unité de microfiltration série (3 ; MF-I).
